(19) Europäisches Patentamt
European Patent Office
Office européen des brevets

(11) Numéro de publication : **0 424 252 B1**

# (12) FASCICULE DE BREVET EUROPEEN

(45) Date de publication du fascicule du brevet : **16.09.92 Bulletin 92/38**

(51) Int. Cl.$^5$ : **B01J 31/02,** B01J 31/12

(21) Numéro de dépôt : **90402909.7**

(22) Date de dépôt : **16.10.90**

## (54) Composition catalytique comprenant du titane et du phosphore, sa préparation et son utilisation pour la condensation d'un époxyde sur un anhydride d'acide carboxylique.

(30) Priorité : **17.10.89 FR 8913658**

(43) Date de publication de la demande : **24.04.91 Bulletin 91/17**

(45) Mention de la délivrance du brevet : **16.09.92 Bulletin 92/38**

(84) Etats contractants désignés : **AT BE CH DE ES FR GB IT LI LU NL SE**

(56) Documents cités :
**EP-A- 0 230 983**
**US-A- 3 664 966**

(73) Titulaire : **INSTITUT FRANCAIS DU PETROLE
1 et 4 Avenue de Bois-Préau BP 311
F-92506 Rueil Malmaison Cédex (FR)**
Titulaire : **L'AIR LIQUIDE, SOCIETE ANONYME POUR L'ETUDE ET L'EXPLOITATION DES PROCEDES GEORGES CLAUDE
75, Quai d'Orsay
F-75321 Paris Cédex 07 (FR)**
Titulaire : **ELF FRANCE
Tour Elf 2, Place de la Coupole
LA DEFENSE 6 - 92400 Courbevoie (FR)**

(72) Inventeur : **Garapon, Jacques
120 rue Mazenod
F-69003 Lyon (FR)**
Inventeur : **Muller, Isabelle
9, Allée des Chênes
F-69360 Serezin du Rhone (FR)**
Inventeur : **Touet, Rémi
Résidence Mutualiste, Le Fontanil
F-38120 Saint Egreve (FR)**
Inventeur : **Huet, Chaterine
50, route de Givry, Saint Remy
F-71100 Chalon sur Saone (FR)**
Inventeur : **Damin, Bernard
162, Grande Rue
F-69600 Oullins (FR)**

(74) Mandataire : **Andreeff, François
INSTITUT FRANCAIS DU PETROLE 4, avenue de Bois-Préau
F-92502 Rueil-Malmaison (FR)**

EP 0 424 252 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne une composition catalytique comprenant du titane et du phosphore, sa préparation et son utilisation notamment comme catalyseur d'estérification d'au moins un époxyde par au moins un anhydride d'acide carboxylique.

La présente invention concerne en particulier la production d'esters à partir d'au moins un époxyde et d'au moins un anhydride d'acide carboxylique, par exemple un anhydride d'acide monocarboxylique.

Elle concerne également la production d'un copolymère de condensation ou polyester, présentant une alternance régulière de chaque type de composés mis en réaction et résultant de la condensation d'au moins un époxyde sur au moins un anhydride cyclique d'acide dicarboxylique.

Ce type d'estérification ou de polyestérification se différencie du procédé classique, où l'on met en oeuvre un composé dihydroxylé (ou diol) et un anhydride ou un acide carboxylique, notamment par le fait que la réaction implique l'ouverture du cycle oxiranne et par le fait qu'il ne se dégage aucune matière volatile au cours de la réaction. Elle se différencie également par le fait que la température de réaction ne dépasse habituellement pas 150 à 200°C.

De nombreux travaux ont été publiés sur la synthèse d'esters et plus particulièrement de polyesters à partir d'époxydes et d'anhydrides d'acides carboxyliques en présence de catalyseurs de divers types. Ces travaux montrent que l'un des problèmes majeurs rencontrés au cours de la réaction de l'époxyde sur l'anhydride en vue de former un ester ou un polyester est lié à l'homopolymérisation de l'époxyde.

Dans le cas de la condensation entre un époxyde (ou dérivé époxydé) et un anhydride cyclique d'un acide dicarboxylique, ces travaux sont résumés, par exemple, par LUSTON et VASS (Advances in Polymer Sciences 1984, Vol. 56, pages 91 et suivantes) ou par ISHII et SAKAI (Ring opening polymerisation, pages 13 et suivantes, édité par K. C. FRISCH et S. L. REEGEN, MARCEL DEKKER 1969).

Dans le cas de la réaction d'un époxyde sur un anhydride d'acide dicarboxylique en vue de produire un polyester alterné, l'homopolymérisation de l'époxyde conduit à l'obtention d'un polyéther-polyester séquencé ou à des mélanges de polymères, en particulier lorsque l'on utilise des acides de LEWIS ($TiCl_4$, $BF_3$, ...) comme catalyseur de condensation. Afin de pallier cet inconvénient, on a proposé, dans l'art antérieur, l'emploi de catalyseurs anioniques ou de coordination.

FISCHER (Journal of Polymer Science 1960, Vol. 44, pages 155 et suivantes) a montré que l'utilisation d'amine tertiaire comme catalyseur de condensation d'un anhydride sur un époxyde permet d'obtenir une condensation alternée. Cependant, ce type de catalyseur s'avère inopérant dans le cas de l'anhydride maléique, vraisemblablement en raison des réactions secondaires complexes avec les amines au niveau de la double liaison maléique. D'autres types de catalyseurs anioniques, tels que les sels de métaux alcalins ou les sels de tétraalkylammonium, ont également été utilisés.

Par exemple, WADILL, MILLIGAN et PEPELL (Industrial and Engineering Chemistry, Product Research and Development 1964, Vol. 3 part.1, pages 53 et suivantes) décrivent l'emploi du chlorure de lithium en présence de substances protoniques à 150°C. Ces auteurs suggèrent que l'homopolymérisation de l'époxyde intervient pour une part dans leur procédé. Comme exemple de catalyseur de coordination, on peut citer les dialkylzinc mentionnés par INOUE et al. (Makromoleculare Chemie 1969, Vol. 126, pages 250 et suivantes) ; ce type de catalyseur de coordination n'est en fait applicable, d'après INOUE et al., qu'au seul anhydride phtalique.

D'autres catalyseurs, à base de métaux de transition, ont également été décrits antérieurement. C'est ainsi que FISCHER (cité supra) observe une homopolymérisation partielle de l'époxyde glycidique lors de sa polycondensation avec l'anhydride phtalique en présence de titanate de tétrabutyle.

Le brevet US-A-3546176 décrit l'utilisation du titanate de térabutyle pour la production de polyesters insaturés à partir d'anhydrides d'acides insaturés et d'époxydes. Cependant, comme le confirmera un test effectué par la demanderesse et décrit ci-après, ce catalyseur ne permet pas d'obtenir avec une vitesse de réaction suffisante (vitesse qui nécessite une température relativement élevée) un polymère présentant une bonne alternance des motifs provenant de l'anhydride et de l'époxyde.

L'un des problèmes que vise à résoudre la présente invention est l'obtention d'un ester ou d'un polyester à basse température tout en ayant une vitesse de réaction très élevée et une conversion importante de chacun des réactifs mis en jeu dans cette synthèse.

Un autre problème que vise à résoudre la présente invention est de limiter au maximum l'homopolymérisation de l'époxyde.

Un autre problème que vise à résoudre la présente invention est l'emploi d'un catalyseur de condensation utilisable aussi bien avec un anhydride tel que l'anhydride maléique qu'avec un anhydride tel que l'anhydride phtalique, en vue d'obtenir des polyesters parfaitement alternés.

Un autre problème que vise à résoudre la présente invention est l'emploi d'un catalyseur de condensation

utilisable aussi bien avec un époxyde interne, c'est-à-dire un époxyde dont chaque atome de carbone du cycle oxiranne comporte au moins un substituant autre qu'un atome d'hydrogène, qu'avec un époxyde terminal, c'est à dire un époxyde dont au moins un des atomes de carbone du cycle oxiranne comporte deux atomes d'hydrogène.

De façon plus précise, la présente invention concerne une composition catalytique comprenant du titane et du phosphore et résultant de la mise en contact d'au moins un titanate de formule générale (I) :

(I) $Ti(OR)_4$

dans laquelle chacun des groupes R, indépendamment, représente habituellement un groupe hydrocarboné ayant de 1 à 10 atomes de carbone, de préférence de 1 à 6 atomes de carbone et le plus souvent de 1 à 4 atomes de carbone,

avec au moins un sel d'"onium" quaternaire d'un acide choisi dans le groupe formé par l'acide phosphorique de formule $H_3PO_4$ et les acides phosphoniques de formule générale (II) :

(II) $R^7H_2PO_3$

dans laquelle $R^7$ en général est un groupe hydrocarboné ayant de 1 à 38 atomes de carbone, de préférence de 4 à 24 atomes de carbone. Habituellement, le groupe $R^7$ est un groupe aliphatique. Les acides phosphoniques que l'on utilise de préférence sont ceux dans lesquels le groupe $R^7$ est un groupe alkyle, linéaire ou ramifié.

Le reste "onium" quaternaire est un reste bien connu de l'homme du métier de formule générale (III) :

(III) $(R^8R^9R^{10}R^{11}M)^+$

dans laquelle M est habituellement un élément appartenant au groupe VA de la classification périodique des éléments (Handbook of Chemistry and Physics, 68ème édition, 1987-1988) et, de préférence, l'azote ou le phosphore ; $R^8$, $R^9$, $R^{10}$ et $R^{11}$, identiques ou différents, représentent habituellement chacun un atome d'hydrogène ou un groupe hydrocarboné, éventuellement substitué par un groupe hydroxyle, ayant de 1 à 38 atomes de carbone et, le plus souvent, de 1 à 24 atomes de carbone. Les groupes $R^8$, $R^9$, $R^{10}$ et $R^{11}$ sont de préférence des groupes alkyles, hydroxyalkyles, aryles ou aralkyles. Le reste "onium" quaternaire que l'on utilise de préférence est un reste de formule générale (III) dans laquelle la somme des atomes de carbone des groupes $R^8$, $R^9$, $R^{10}$ et $R^{11}$ est de 4 à 80 et le plus souvent de 7 à 44. On peut citer, à titre d'exemples non limitatifs de restes "onium" (ammonium et phosphonium) quaternaires, les restes tétraméthylonium, tétraéthylonium, tétrapropylonium, tétrabutylonium, tétraphénylonium, tétrabenzylonium, méthyltributylonium, méthyltriéthylonium, méthyltriphénylonium, butyltriphénylonium, éthyltriphénylonium, benzyltriméthylonium, benzyltributylonium, benzyltriphénylonium, phényltriméthylonium, octadécyltriméthylonium, naphtyltriméthylonium, tolyltriméthylonium, diméthyldioctadécylonium, diméthyldihexadécylonium, dioctadécyhydroxyéthylméthylonium, dioctadécylhydroxypropylméthylonium et tricaprylylméthylonium (mélange $C_8$ et $C_{10}$ avec prédominance $C_8$, connu sous le nom d'ALIQUAT 336(R)).

Le sel d'"onium" quaternaire que l'on utilise dérive, d'un point de vue formel, du remplacement d'un ou plusieurs protons de l'acide phosphorique ou des acides phosphoniques de type $R^7H_2PO_3$ par un reste "onium" quaternaire, défini ci-avant, de formule générale (III). Ce sel d'"onium" quaternaire peut ainsi comprendre dans sa molécule 2, 3 ou 4 atomes du groupe VA suivant le nombre de fonctions acides salifiées et suivant l'acide utilisé. On emploie le plus souvent des sels d'"onium" comprenant 2 ou 3 atomes du groupe VA dans leur molécule.

Parmi les titanates de formule générale (I), on emploie de préférence ceux dans lesquels chacun des groupes R, indépendamment, représente un groupe alkyle, linéaire ou ramifié, par exemple un groupe alkyle inférieur ayant de 1 à 4 atomes de carbone tel que méthyle, éthyle, n-propyle, isopropyle, n-butyle, isobutyle, tertiobutyle et méthyl-1 propyle.

Habituellement, la quantité de titanate mise en contact avec le sel d'"onium" quaternaire de l'acide phosphorique ou phosphonique utilisé est telle que le rapport molaire titanate/sel d'"onium" quaternaire mis en présence est de 0,5 : 1 à 2 : 1 et, de préférence, de 0,8 : 1 à 1,25 : 1.

La composition catalytique de la présente invention est habituellement obtenue par mise en contact du titanate et du sel d'"onium" dans un milieu liquide qui est de préférence un liquide organique et le plus souvent un composé hydrocarboné ou un mélange de composés hydrocarbonés. Comme milieu liquide, on utilisera très avantageusement le solvant que l'on envisage d'employer lors de la mise en oeuvre de la réaction d'estérification ou de polyestérification. Cette mise en contact est habituellement effectuée à une température de 0 à 100°C, le plus souvent de 10 à 80°C et, de préférence, de 15 à 30°C. La mise en contact aura avantageusement lieu à la température ambiante (15 à 25 °C). La durée du contact entre le titanate et le sel d'"onium" est habituellement de 1 à 60 minutes et, le plus souvent, de 1 à 30 minutes. Cette mise en contact est le plus souvent effectuée à la pression atmosphérique, mais il est également possible d'opérer sous une pression supérieure ou inférieure à la pression atmosphérique.

Il n'est pas impératif d'opérer sous atmosphère inerte, mais le plus souvent on réalisera le contact sous

atmosphère inerte, d'azote ou d'argon par exemple.

L'invention a aussi pour objet l'utilisation de la composition catalytique définie ci-avant comme catalyseur d'estérification ou de polyestérification d'au moins un époxyde par au moins un anhydride d'acide carboxylique.

L'anhydride d'acide carboxylique que l'on emploie habituellement est un anhydride d'acide monocarboxylique ou un anhydride cyclique d'acide dicarboxylique.

Les anhydrides d'acides monocarboxyliques éventuellement employés sont notamment ceux dérivant des acides monocarboxyliques de formule générale $R^{12}COOH$ dans laquelle $R^{12}$ représente un groupe organique, de préférence un groupe hydrocarboné ayant habituellement de 1 à 160 atomes de carbone et, le plus souvent, de 2 à 90 atomes de carbone ; ce groupe peut éventuellement être substitué par au moins un hétéroatome ou au moins un groupe hétéroatomique. A titre d'exemple d'hétéroatome, on peut citer les halogènes et en particulier le chlore et le brome et, à titre d'exemple de groupe hétéroatomique, on peut citer les groupes oxo et les groupes alcoxy. Le groupe $R^{12}$ est le plus souvent un groupe aliphatique, par exemple un groupe alkyle ou alkylène, linéaire ou ramifié, ou un groupe cycloaliphatique, ou un groupe araliphatique, par exemple un groupe aryl-alkyle (aralkyle) ou un groupe alkyle-aryle (alkaryle) ou un groupe aryle. L'anhydride utilisé peut être un anhydride dérivant d'un seul acide monocarboxylique (anydride dit symétrique) ou un anhydride dérivant de deux acides monocarboxyliques différents (anhydride dit mixte).

L'anhydride cyclique d'un acide dicarboxylique que l'on emploie éventuellement dans la présente invention est de préférence un anhydride d'un acide dicarboxylique vicinal. Cet acide dicarboxylique vicinal est habituellement choisi parmi les acides aliphatiques ou cycloaliphatiques, saturés ou insaturés, le plus souvent insaturés, et parmi les acides comportant un noyau aromatique dans leur molécule. L'anhydride cyclique utilisé comporte habituellement de 4 à 160 atomes de carbone et, le plus souvent, de 4 à 90 atomes de carbone dans sa molécule.

On peut citer, à titre d'exemples non limitatifs d'anhydrides d'acides carboxyliques, les anhydrides dérivant d'un ou de deux des acides suivants : l'acide formique, l'acide acétique, l'acide propanoique, les acides butanoiques tels que l'acide butyrique et l'acide isobutyrique, les acides pentanoiques tels que l'acide valérique, l'acide isovalérique et l'acide pivalique, les acides hexanoiques tels que l'acide caproique et l'acide méthyl-2 pentanoique, les acides heptanoiques tels que l'acide énanthique, les acides octanoiques tels que l'acide caprylique, l'acide isooctanoique et l'acide éthyl-2 hexanoique, les acides nonanoiques tels que l'acide isononanoique et l'acide pélargonique, les acides décanoiques tels que l'acide caprique, l'acide isodécanoique et l'acide néodécanoique, les acides dodécanoiques tels que l'acide laurique, les acides tétradécanoiques tels que l'acide myristique, les acides hexadécanoiques tels que l'acide palmitique, les acides octadécanoiques tels que l'acide stéarique, les acides éicosanoiques, les acides docosanoiques tels que l'acide béhénique, les acides tétracosanoiques, les acides hexacosanoiques tels que l'acide cérotique, l'acide acrylique, l'acide méthacrylique, l'acide crotonique, l'acide isocrotonique, l'acide angélique, l'acide tiglique, l'acide sorbique, les acides décyléniques, les acides undécyléniques, les acides dodécyléniques, l'acide palmitoléique, les acides insaturés en C18 tels que l'acide oléique, l'acide linoléique et l'acide linolénique, l'acide gadoléique,l'acide arachidonique, l'acide érucique, les acides mono-, di- et trichloroacétiques, l'acide chloro-2 propanoique, l'acide dichloro-2,2- propanoique, l'acide cyclohexanecarboxylique, l'acide benzoique, l'acide cinnamique, l'acide phényl-2 propanoique, l'acide méthoxy-4 benzoique et l'acide toluique.

On peut citer à titre d'exemples non limitatifs d'anhydrides cycliques d'acides dicarboxyliques : l'anhydride maléique, les anhydrides alkylmaléiques tels que par exemple l'anhydride citraconique ou méthylmaléique, les anhydrides halogénomaléiques tels que par exemple, les anhydrides chloro- et bromo-maléiques, l'anhydride succinique, les anhydrides alcénylsucciniques tels que par exemple l'anhydride itaconique ou méthylènesuccinique, l'anhydride n-octadécénylsuccinique et l'anhydride dodécénylsuccinique, les anhydrides polyalcénylsucciniques ayant habituellement une masse moléculaire moyenne en nombre de 200 à 3000 et, le plus souvent, de 250 à 2000 (tels que par exemple les anhydrides polypropénylsucciniques, en particulier l'anhydride tétrapropénylsuccinique, et les anhydrides polyisobuténylsucciniques souvent dénommés PIBSA), l'anhydride phtalique, les anhydrides phtaliques substitués par au moins un atome d'halogène et/ou par au moins un groupe alkyle, par exemple un groupe alkyle inférieur ayant de 1 à 4 atomes de carbone, l'anhydride trimellitique estérifié, l'anhydride cyclohexanedicarboxylique-1,2, les anhydrides cyclohexanedicarboxyliques-1,2 substitués par au moins un atome d'halogène et/ou par au moins un groupe alkyle, par exemple un groupe alkyle inférieur ayant de 1 à 4 atomes de carbone, l'anhydride nadique ou bicyclo[2,2,1] heptène-5 dicarboxylique-2,3 et les anhydrides nadiques substitués par au moins un atome d'halogène et/ou par au moins un groupe alkyle, par exemple un groupe alkyle inférieur ayant de 1 à 4 atomes de carbone.

On peut encore citer à titre d'exemples d'anhydride cyclique d'un acide dicarboxylique non vicinal, l'anhydride glutarique, les anhydrides glutariques substitués par au moins un atome d'halogène et/ou par au moins un groupe alkyle, par exemple un groupe alkyle inférieur ayant de 1 à 4 atomes de carbone, l'anhydride glutaconique et les anhydrides glutaconiques substitués par au moins un atome d'halogène et/ou par au moins

un groupe alkyle, par exemple un groupe alkyle inférieur ayant de 1 à 4 atomes de carbone.

Le composé époxydé, utilisé dans le cadre de la présente invention, est un composé ayant habituellement de 2 à 62 atomes de carbone, de préférence de 2 à 40 atomes de carbone et, le plus souvent, de 6 à 36 atomes de carbone dans sa molécule. Ce composé époxydé est habituellement soit un époxyde interne, soit un époxyde terminal.

Dans le cadre de la présente invention, on utilise de préférence des composés monoépoxydés. Il est cependant également possible d'utiliser des composés polyépoxydés, qui renferment plusieurs groupes époxydes (cycles oxirannes) dans leur molécules, par exemple 2 ou 3 groupes époxydes. On peut également utiliser des mélanges de composés époxydés comprenant des composés monoépoxydés et des composés polyépoxydés. Dans le cas où l'on effectue la condensation d'au moins un anhydride cyclique d'un acide dicarboxylique sur un mélange de composés époxydés contenant des composés polyépoxydés en vue de former un polymère, on utilisera des mélanges comprenant habituellement une proportion d'au moins 80 %, de préférence d'au moins 90 % et, par exemple, d'au moins 95 % en moles de composés monoépoxydés ; la proportion molaire des composés polyépoxydés dans le mélange représente le complément à 100 %.

L'époxyde que l'on emploie dans la présente invention est le plus souvent un composé monoépoxydé répondant à la formule générale (IV) :

(IV) 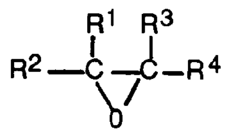

dans laquelle :

– $R^1$ et $R^3$, identiques ou différents, représentent chacun un atome d'hydrogène ou un groupe alkyle inférieur ayant de 1 à 4 atomes de carbone tel que défini ci-avant ;

– $R^2$ et $R^4$, identiques ou différents, représentent chacun un atome d'hydrogène, un groupe hydrocarboné, éventuellement substitué par au moins un atome d'halogène (chlore, brome, fluor ou iode), ayant de 1 à 60 atomes de carbone (tel que, par exemple, un groupe alkyle, linéaire ou ramifié, et de préférence sensiblement linéaire, ayant de 1 à 60 atomes de carbone, de préférence de 1 à 38 atomes de carbone et, le plus souvent, de 4 à 34 atomes de carbone, un groupe alcényle, linéaire ou ramifié, et de préférence sensiblement linéaire, comportant une ou plusieurs doubles liaisons et ayant de 2 à 60 atomes de carbone, de préférence de 2 à 38 atomes de carbone et, le plus souvent, de 4 à 34 atomes de carbone, un groupe cycloaliphatique ayant de 3 à 60 atomes de carbone et, de préférence, de 5 à 38 atomes de carbone, un groupe aryle ayant de 6 à 60 atomes de carbone, un groupe aryl-alkyle (aralkyle) ou un groupe alkyl-aryle (alkaryle) ayant de 7 à 60 atomes de carbone ou les groupes correspondants substitués par au moins un atome d'halogène), un groupe alkoxyalkyle de formule $R^5$-O-$R^6$- dans laquelle $R^5$ représente un groupe hydrocarboné, éventuellement substitué par au moins un atome d'halogène, ayant de 1 à 60 atomes de carbone tel que, par exemple, les groupes hydrocarbonés décrits ci-avant et $R^6$ représente un groupe hydrocarboné divalent ayant de 1 à 60 atomes de carbone tel que, par exemple, un groupe alkylène ayant de 1 à 60 atomes de carbone, un groupe alcénylène ayant de 2 à 60 atomes de carbone et, le plus souvent, de 2 à 38 atomes de carbone, un groupe cycloalkylène ayant de 3 à 60 atomes de carbone et le plus souvent de 5 à 38 atomes de carbone ou un groupe arylène ayant de 6 à 60 et le plus souvent de 6 à 38 atomes de carbone ; $R^2$ peut également représenter un groupe de formule $R^5$-O-CO-$R^6$- ou un groupe de formule $R^5$-CO-O-$R^6$-, dans lesquelles $R^5$ et $R^6$ ont la définition donnée ci-avant, tels que, par exemple, un groupe alkoxycarbonylalkylène ou un groupe alkylcarbonyloxyalkylène ; $R^2$ et $R^4$ peuvent également former ensemble avec les atomes de carbone auxquels ils sont liés un cycle, saturé ou insaturé, ayant par exemple de 4 à 62 atomes de carbone.

Les composés monoépoxydés utilisés le plus souvent sont ceux dans lesquels $R^1$ et $R^3$ représentent chacun un atome d'hydrogène et de préférence ceux dans lesquels $R^1$, $R^3$ et $R^4$ représentent chacun un atome d'hydrogène.

A titre d'exemples de composés monoépoxydés préférés, on peut citer les composés dans lesquels $R^1$, $R^3$ et $R^4$ représentent chacun un atome d'hydrogène et $R^2$ représente un groupe alkyle sensiblement linéaire ayant de 4 à 34 atomes de carbone ; un groupe alkoxyalkyle sensiblement linéaire, de formule $R^5$-O-$R^6$-, un groupe alkoxycarbonylalkylène de formule $R^5$-O-CO-$R^6$- ou un groupe alkylcarbonyloxyalkylène de formule $R^5$-CO-O-$R^6$- dans lesquelles $R^5$ représente un groupe alkyle, sensiblement linéaire, ayant de 1 à 37 atomes de carbone et, de préférence, de 1 à 25 atomes de carbone et $R^6$ représente un groupe alkylène, sensiblement linéaire, ayant de 1 à 37 atomes de carbone et, de préférence, de 1 à 33 atomes de carbone, la somme des

atomes de carbone de $R^5$ et $R^6$ étant le plus souvent de 2 à 38 et, de préférence, de 4 à 34.

A titre d'exemples spécifiques de composés monoépoxydés, on peut citer : l'oxyde d'éthylène, l'oxyde de propylène, l'époxy-1,2 butane, l'époxy-1,2 pentane, l'époxy-1,2 hexane, l'époxy-1,2 heptane, l'époxy-1,2 octane, l'époxy-1,2 nonane, l'époxy-1,2 décane, l'époxy-1,2 undécane, l'époxy-1,2 dodécane, l'époxy-1,2 tétradécane, l'époxy-1,2 pentadécane, l'époxy-1,2 hexadécane, l'époxy-1,2 heptadécane, l'époxy-1,2 octadécane, l'époxy-1,2 nonadécane, l'époxy-1,2 éicosane, l'époxy-1,2 docosane, l'époxy-1,2 tétracosane, l'époxy-1,2 hexacosane, les polybutènes époxydés de masse moléculaire moyenne (Mn) comprise entre environ 100 et environ 1000, l'époxy-2,3 butane, l'époxy-2,3 pentane, l'époxy-2,3 hexane, l'époxy-3,4 heptane, l'époxy-2,3 octane, l'époxy-3,4 octane, l'époxy-3,4 décane, l'époxy-9,10 octadécane, l'éthoxy-3 époxy-1,2 propane, le propoxy-3 époxy-1,2 propane, le butoxy-3 époxy-1,2 propane, le pentyloxy-3 époxy-1,2 propane, l'hexyloxy-3 époxy-1,2 propane, l'heptyloxy-3 époxy-1,2 propane, l'octyloxy-3 époxy-1,2 propane, le décyloxy-3 époxy-1,2 propane, le dodécyloxy-3 époxy-1,2 propane, l'acétoxy-1 époxy-2,3 propane, le butyryloxy-1 époxy-2,3 propane, le lauroyloxy-1 époxy-2,3 propane, le myristoyloxy-3 époxy-1,2 propane, le palmitoyloxy-3 époxy-1,2 propane, le stéaroyloxy-3 époxy-1,2 propane, les esters alkyliques,par exemples méthylique, éthylique, n-propylique, isopropylique, n-butylique, sec-butylique, isobutylique, tertiobutylique, éthyl-2 hexylique et hexadécylique des acides époxy-3,4 butanoique, époxy-4,5 pentanoique, époxy-3,4 nonanoique, époxy-10,11 undécanoique, époxy-6,7 octadécanoique, époxy-12,13 octadécanoique, époxy-11,12 octadécanoique, époxy-9,10 octadécanoique, époxy-11,12 éicosanoique et époxy-13,14 docosanoique, le chloro-1 époxy-2,3 propane, l'époxy-2,3 méthyl-2 butane, l'époxycyclopentane, l'époxycyclohexane, l'époxycyclododécane, l'alphapinèneoxyde (triméthyl-2,7,7 oxa-3 tricyclo 4,1,1,0 octane) et l'oxyde de styrène (phényloxiranne).

A titre d'exemples spécifiques de mélange de composés époxydés comprenant des polyépoxydes, on peut citer le mélange d'esters alkyliques obtenu par estérification d'un mélange d'époxyacides résultant de l'époxydation d'un mélange d'acides gras éthyléniquement insaturés.

Le mélange d'acides gras éthyléniquement insaturé est par exemple un mélange comportant, en proportions pondérales approximatives données dans le tableau (I) ci-après, des acides ayant de 12 à 20 atomes de carbone dans leur molécule et contenant des acides saturés et insaturés ; ce mélange est habituellement dénommé oléine.

## TABLEAU I

| ACIDES | $C_{12}^{*}$ | $C_{14}^{*}$ | $C_{14.1}$ | $C_{15}^{*}$ | $C_{16}^{*}$ | $C_{16.1}$ | $C_{17.1}$ | $C_{18}^{*}$ | $C_{18.1}$ | $C_{18.2}$ | $C_{18.3}$ | $C_{20.1}$ |
|---|---|---|---|---|---|---|---|---|---|---|---|---|
| %Poids | 0,8 | 2,7 | 1,0 | 0,5 | 5,0 | 5,5 | 1,5 | 1,5 | 68,0 | 10,0 | 2,5 | 1,0 |

* acides saturés

Dans le tableau (I) ci-avant, $C_{p.1}$ désigne des acides comportant une insaturation éthylénique, $C_{p.2}$ désigne des acides comportant 2 insaturations éthyléniques et $C_{p.3}$ désigne des acides comportant 3 insaturations éthyléniques (p est le nombre d'atomes de carbone de l'acide).

Pour l'estérification du mélange d'époxyacides, on utilise par exemple un mélange d'alcools comprenant en proportions pondérales approximatives environ 95 % d'alcool n-hexadécylique, 3 % d'alcool n-octadécylique et 2 % d'alcools ayant plus de 18 atomes de carbone dans leur molécule.

La réaction entre au moins un époxyde et au moins un anhydride d'acide carboxylique peut être effectuée en présence ou en absence de solvant. On préfère en général utiliser un solvant, tel que par exemple un solvant hydrocarboné. A titre d'exemples non limitatifs de solvants hydrocarbonés utilisables, on peut citer le benzène, le toluène, le xylène, l'éthylbenzène, le cyclohexane, l'hexane ou un mélange d'hydrocarbures tel que, par exemple, une coupe hydrocarbonée à point d'ébullition élevé telle qu'un gazole, un kérosène, ou la coupe commerciale SOLVESSO 150 (190-209°C) contenant 99 % en poids de composés aromatiques. On peut également utiliser des mélanges de solvants, par exemple un mélange de xylènes.

La réaction d'estérification ou de polyestérification (condensation) est habituellement effectuée à une température de 0 à 200°C, de préférence de 10 à 180°C et, par exemple, de 20 à 150°C. On opère habituellement sous pression normale ou sous la pression engendrée par les constituants du mélange, mais il est possible d'opérer sous une pression supérieure ou au contraire sous une pression inférieure à la pression atmosphérique.

La condensation entre l'anhydride d'acide et l'époxyde est en général effectuée en employant des quantités de chacun de ces deux composés telles que le rapport molaire époxyde/anhydride d'acide soit de 0,1 : 1 à 2 : 1, de préférence de 0,3 : 1 à 1,3 : 1 et, par exemple, de 0,9 : 1 à 1,1 : 1.

La durée de la réaction est habituellement de 30 minutes à 24 heures et, par exemple, de 1 à 12 heures. Cette durée est de préférence celle qui correspond, dans les conditions choisies, à une disparition pratiquement complète de l'un des réactifs (époxyde ou anhydride) mis en jeu dans la réaction.

La composition catalytique comprenant du titane et du phosphore est habituellement ajoutée au mélange d'époxyde et d'anhydride sous forme diluée (solution ou dispersion) dans un solvant qui est de préférence le même que celui employé pour la réaction. Il est également possible d'ajouter à la solution ou dispersion de la composition catalytique dans un liquide, qui est de préférence le solvant choisi pour effectuer la réaction, l'époxyde et l'anhydride que l'on désire faire réagir.

La quantité de composition catalytique employée, exprimée en atome- gramme de titane pour 100 moles d'époxyde, est habituellement de 0,05 à de 5 % et, de préférence, de 0,1 à 2 %.

Le polyester issu de la réaction, selon l'invention, d'un époxyde sur un anhydride d'acide dicarboxylique est un composé qui présente habituellement une masse moléculaire moyenne en nombre de 400 à 50000 et dont les motifs issus de l'époxyde et de l'anhydride sont régulièrement alternés. Par ailleurs, l'utilisation de la composition catalytique de la présente invention permet de réduire très largement l'homopolymérisation de l'époxyde par rapport à ce que l'on obtient en utilisant un titanate de tétraalkyle tel que par exemple le titanate de tétrabutyle, tout en conservant une vitesse de réaction élevée, ce qui permet aussi d'obtenir, à isoconditions, une conversion des produits de départ relativement élevée comme le montrent les exemples suivants.

Ces exemples illustrent l'invention sans en limiter la portée. Les exemples 1 à 4 et 12 sont donnés à titre de comparaison.

**Exemple 1**

On introduit dans un réacteur de 100 ml, muni d'un système d'agitation et d'un système de régulation de la température, (14,7 g) 0,15 mole d'anhydride maléique, (42,9 g) 0,15 mole d'époxy-1,2 hexadécane dont l'indice d'oxiranne est de 5,6 %, 14,6 ml de xylène et 1,4 ml d'une solution dans le xylène à 50 % en poids de titanate de tétrabutyle de formule $Ti(OC_4H_9)_4$ (2,25 x$10^{-3}$ mole) comme catalyseur à base de titane.

Le mélange obtenu dans le réacteur est porté a 60°C et maintenu, sous agitation constante, à cette température pendant 8 heures. La réaction est suivie par spectrométrie infrarouge(IR) et par Chromatographie d'Exclusion sur Gel (en anglais, Gel Permeation Chromatography G.P.C.). En spectrométrie infrarouge, on observe l'apparition d'une bande ester à 1730 $cm^{-1}$ et la diminution de l'intensité des bandes carbonyles de l'anhydride maléique à 1770 $cm^{-1}$ et 1840 $cm^{-1}$. On a représenté sur la figure 1 le pourcentage de conversion de chacun des constituants en fonction du temps en heures (mesures par G.P.C.). La courbe A concerne l'anhydride maléique et la courbe B l'époxy-1,2 hexadécane. Après 8 heures de réaction à 60°C, la conversion de l'époxyde est de 74 % et celle de l'anhydride maléique de 68 %. A cette température, on constate que la réaction est très lente.

**Exemple 2**

On opère dans les mêmes conditions que dans l'exemple 1, mais en fixant la température à 80°C. On a représenté sur la figure 2 le pourcentage de conversion de chacun des constituants en fonction du temps en heures (mesures par G.P.C.). La courbe A concerne l'anhydride maléique et la courbe B l'époxy-1,2 hexadécane. Après 6 heures de réaction à 80°C, la conversion de l'époxyde est de 100 % et celle de l'anhydride maléique de 74 %. On constate qu'à cette température la réaction est assez rapide, cependant l'homopolymérisation de l'époxyde est assez élevée et dépasse largement 20 % au bout des 6 heures de réaction. Par ailleurs, la figure 2 montre que la conversion de l'époxyde est nettement plus rapide que celle de l'anhydride dès le début de la réaction. Le polymère obtenu n'est pas un polymère parfaitement alterné.

**Exemple 3**

On opère dans les mêmes conditions que dans l'exemple 1, mais en employant, comme catalyseur, 1,305 g (2,25 x $10^{-3}$ mole) de phosphate d'ammonium de formule $(HPO_4)^{2-}$,$2(NR^8R^9R^{10}R^{11})^+$ dans laquelle les groupes $R^8$, $R^9$, $R^{10}$ et $R^{11}$ représentent chacun un groupe n-butyle. Ce phosphate est obtenu après 1 heure de réaction, en milieu méthanolique, à température ambiante, d'une mole d'acide phosphorique avec deux moles d'hydroxyde de tétrabutyle ammonium, suivie d'une évaporation complète du solvant. Après 6 heures de réaction à 60°C, la conversion de l'époxyde est de 20 % et celle de l'anhydride maléique de 4 %. On n'observe pas de formation notable de polymère.

**Exemple 4**

On opère dans les mêmes conditions que dans l'exemple 1, mais en employant, comme catalyseur, 1,52 g (2,25 x $10^{-3}$ mole) d'un phosphate d'ammonium de formule $(R^7PO_3)^{2-},2(NR^8R^9R^{10}R^{11})^+$ dans laquelle les groupes $R^8$, $R^9$, $R^{10}$ et $R^{11}$ représentent chacun un groupe n-butyle et $R^7$ représente un groupe dodécyle. Ce sel est obtenu de la même manière que dans l'exemple 3, mais en remplaçant l'acide phosphorique par l'acide dodécylphosphonique (commercialisé par la société HOECHST sous le nom de HOSTAPHAT OPS). Après 6 heures de réaction à 60°C, la conversion de l'époxyde est de 21 % et celle de l'anhydride maléique de 50 %. La réaction, très incomplète, ne conduit pas à un polymère.

**Exemple 5**

On introduit dans un réacteur de 100 ml, muni d'un système d'agitation et d'un système de régulation de la température, (14,7 g) 0,15 mole d'anhydride maléique, (42,9 g) 0,15 mole d'époxy-1,2 hexadécane dont l'indice d'oxiranne est de 5,6 %, 14,6 ml de xylène et 2,25 x $10^{-3}$ mole d'une composition catalytique résultant du mélange équimolaire du phospate d'ammonium utilisé dans l'exemple 3 et de titanate de tétrabutyle. Cette composition catalytique est préparée immédiatement avant utilisation par simple mélange de ses constituants dans 2 ml de xylène.

Après 3 heures de réaction à 60°C, la conversion de l'époxyde est de 100 % et celle de l'anhydride maléique de 95 %. On a représenté sur la figure 3 le pourcentage de conversion de chacun des constituants en fonction du temps en heures (mesures par G.P.C.). La courbe A concerne l'anhydride maléique et la courbe B l'époxy-1,2 hexadécane. Le polyester obtenu a une masse moléculaire moyenne en nombre, par rapport à un étalonnage sur polystyrène, de 3450 et une polydispersité de 1,27. La figure 3 montre que les conversions de l'époxyde et de l'anhydride sont, en particulier pendant les premières heures de la réaction, sensiblement égales à chaque instant, ce qui permet de conclure à la formation d'un polymère parfaitement alterné. L'homopolymérisation de l'époxyde est faible : elle ne dépasse pas 5 % au bout des 3 heures de réaction.

**Exemple 6**

On répète l'exemple 5, mais en employant 1,12 x $10^{-3}$ mole de la composition catalytique décrite dans l'exemple 5. Après 6 heures de réaction à 60°C, la conversion de l'époxyde est de 100 % et celle de l'anhydride maléique de 96 %. On a représenté sur la figure 4 le pourcentage de conversion de chacun des constituants en fonction du temps en heures (mesures par G.P.C.). La courbe A concerne l'anhydride maléique et la courbe B l'époxy-1,2 hexadécane. Dans ces conditions, on constate que la réaction est rapide et que l'homopolymérisation n'atteint pas 5 % au bout des 6 heures de réaction. Le polymère obtenu est un polymère parfaitement alterné.

**Exemple 7**

On répète l'exemple 5, mais en remplaçant l'anhydride maléique par l'anhydride phtalique et en ajoutant 20 ml de solvant pour obtenir un mélange homogène à la température de réaction. Après 6 heures de réaction à 80°C, la conversion de l'époxyde est de 100 % et celle de l'anhydride phtalique de 98 %. On a représenté sur la figure 5 le pourcentage de conversion de chacun des constituants en fonction du temps en heures (mesures par G.P.C.). La courbe A concerne l'anhydride phtalique et la courbe B l'époxy-1,2 hexadécane. Le polyester obtenu a une masse moléculaire moyenne en nombre, par rapport à un étalonnage sur polystyrène, de 2335 et une polydispersité de 1,31.

**Exemple 8**

On répète l'exemple 5, mais en remplaçant l'anhydride maléique par l'anhydride acétique. Après 10 heures de réaction à 80°C, la conversion de chacun des réactifs est sensiblement égale à 100 %. En spectrométrie infrarouge, on observe l'apparition d'une bande ester à 1730 $cm^{-1}$ et la disparition des bandes carbonyles de l'anhydride maléique à 1770 $cm^{-1}$ et 1840 $cm^{-1}$. Le spectre infrarouge du produit obtenu est conforme au spectre de l'ester attendu.

**Exemple 9**

On répète l'exemple 5, mais en remplaçant l'anhydride maléique par l'anhydride benzoique. Après 10 heures de réaction à 80°C, la conversion de chacun des réactifs est sensiblement égale à 100 %. En spectrométrie infrarouge, on observe l'apparition d'une bande ester à 1730 $cm^{-1}$ et la disparition des bandes carbonyles de l'anhydride maléique à 1770 $cm^{-1}$ et 1840 $cm^{-1}$. Le spectre infrarouge du produit obtenu est conforme au spectre de l'ester attendu.

**Exemple 10**

On répète l'exemple 5, mais en remplaçant l'anhydride maléique par l'anhydride laurique. Après 10 heures de réaction à 80°C, la conversion de chacun des réactifs est sensiblement égale à 100 %. En spectrométrie infrarouge, on observe l'apparition d'une bande ester à 1730 $cm^{-1}$ et la disparition des bandes carbonyles de l'anhydride maléique à 1770 $cm^{-1}$ et 1840 $cm^{-1}$. Le spectre infrarouge du produit obtenu est conforme au spectre de l'ester attendu.

**Exemple 11**

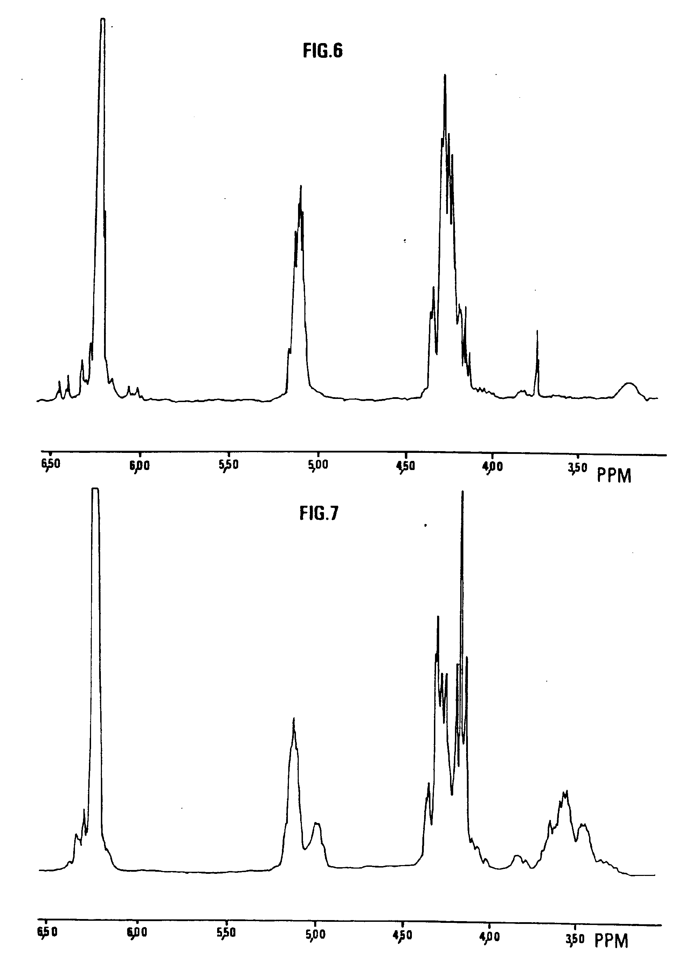

On répète l'exemple 5, mais en remplaçant l'époxy-1,2 hexadécane par l'époxy-1,2 butane. Après 6 heures de réaction à 30°C, la conversion de chacun des réactifs est sensiblement égale à 100 %. En spectrométrie infrarouge, on observe l'apparition d'une bande ester à 1730 $cm^{-1}$ et la disparition des bandes carbonyles de l'anhydride maléique à 1770 $cm^{-1}$ et 1840 $cm^{-1}$. Le spectre R.M.N. (figure 6) du polyester obtenu présente :

- un massif centré à 6,25 ppm représentant les deux protons portés par la double liaison maléate ;
- un massif centré à 5,1 ppm représentant le proton méthyne provenant de l'époxyde ;
- un massif centré à 4,25 ppm représentant les deux protons méthylène provenant de l'époxyde.

On ne constate aucun massif correspondant à des protons éthers dus à l'homopolymérisation de l'époxyde. Le polyester obtenu est parfaitement alterné.

**Exemple 12**

On répète l'exemple 1, mais en remplaçant l'époxy-1,2 hexadécane par l'époxy-1,2 butane. Après 6 heures de réaction à 30°C, la conversion de l'époxyde est sensiblement égale à 100 %. Celle de l'anhydride maléique n'est que de 70 %. En spectrométrie infrarouge, on observe l'apparition d'une bande ester à 1730 $cm^{-1}$ et la disparition partielle des bandes carbonyles de l'anhydride maléique à 1770 $cm^{-1}$ et 1840 $cm^{-1}$. Le spectre R.M.N. (figure 7) du polyester obtenu présente :

- un massif centré à 6,25 ppm représentant les deux protons portés par la double liaison maléate ;
- un massif centré à 5,1 ppm représentant le proton méthyne provenant de l'époxyde ;
- un massif centré à 4,25 ppm représentant les deux protons méthylène provenant de l'époxyde.

On constate d'autre part deux massifs centrés respectivement à 4,95 et 3,55 ppm correspondant à des séquences oligo-éthers dans le polyester.

**Exemple 13**

On répète l'exemple 5, mais en remplaçant l'époxy-1,2 hexadécane par l'ester éthyl-2 hexylique de l'acide époxy-9,10 octadécanoique et en utilisant 4,5 x $10^{-3}$ moles de la composition catalytique décrits dans l'exemple 5. Après 10 heures de réaction à 80°C, la conversion de chacun des réactifs est sensiblement égale à 100 %. En spectrométrie infrarouge, on observe l'apparition d'une bande ester a 1730 $cm^{-1}$ et la disparition des bandes carbonyles de l'anhydride maléique à 1770 $cm^{-1}$ et 1840$cm^{-1}$.

**Exemple 14**

On répète l'exemple 5, mais en remplaçant l'époxy-1,2 hexadécane par l'époxy-1,2 cyclododécène et en utilisant 4,5 x $10^{-3}$ moles de la composition catalytique décrite dans l'exemple 5. En spectrométrie infrarouge, on observe l'apparition d'une bande ester à 1730 $cm^{-1}$ et la disparition des bandes carbonyles de l'anhydride maléique à 1770 $cm^{-1}$ et 1840 $cm^{-1}$. Après 6 heures de réaction à 80°C, la conversion de l'époxyde est de 100 % et celle de l'anhydride maléique de 97 %. On a représenté sur la figure 8 le pourcentage de conversion de chacun des constituants en fonction du temps en heures (mesures par G.P.C.). La courbe A concerne l'anhydride maléique et la courbe B l'époxy-1,2 cyclododécène. Le polyester obtenu a une masse moléculaire

moyenne en nombre, par rapport à un étalonnage sur polystyrène, de 2565 et une polydispersité de 1,1.

**Exemple 15**

On répète l'exemple 13, mais en remplacant l'anhydride maléique par l'anhydride acétique. Après 19 heures de réaction à 80°C, la conversion de chacun des réactifs est sensiblement égale à 100 %. Le spectre infra-rouge obtenu est conforme à celui de l'acétate attendu.

## Revendications

1- Composition catalytique comprenant du titane et du phosphore caractérisée en ce qu'elle résulte de la mise en contact d'au moins un titanate de formule générale (I) :

(I) $Ti(OR)_4$

dans laquelle chacun des groupes R, indépendamment, représente un groupe hydrocarboné ayant de 1 à 10 atomes de carbone, avec au moins un sel d'"onium" quaternaire d'un acide choisi dans le groupe formé par l'acide phosphorique de formule $H_3PO_4$ et les acides phosphoniques de formule générale (II) :

(II) $R^7H_2PO_3$

dans laquelle $R^7$ est un groupe hydrocarboné ayant de 1 à 38 atomes de carbone, et dont le reste "onium" quaternaire est un reste de formule générale (III) :

(III) $(R^8R^9R^{10}R^{11}M)^+$

dans laquelle M est un élément appartenant au groupe VA de la classification périodique des éléments, et $R^8$, $R^9$, $R^{10}$ et $R^{11}$, identiques ou différents, représentent chacun un atome d'hydrogène ou un groupe hydrocarboné, substitué ou non par un groupe hydroxyle, ayant de 1 à 38 atomes de carbone.

2 - Composition selon la revendication 1 dans laquelle le reste "onium" quaternaire est un reste de formule générale (III) dans laquelle M représente un atome d'azote ou de phosphore.

3 - Composition selon l'une des revendications 1 et 2 dans laquelle le sel d'"onium" quaternaire est un sel de l'acide phosphorique comprenant dans sa molécule 2, 3 ou 4 atomes du groupe VA de la classification périodique des éléments.

4 - Composition selon l'une des revendications 1 et 2 dans laquelle le sel d'"onium" quaternaire est un sel d'un acide phosphonique de formule générale (II) comprenant dans sa molécule 2 ou 3 atomes du groupe VA de la classification périodique des éléments.

5 - Composition selon l'une des revendications 1 à 4 dans laquelle le titanate est un titanate de formule générale (I) dans laquelle chacun des groupe R, indépendamment, représente un groupe alkyle, linéaire ou ramifié.

6 - Composition selon l'une des revendications 1 à 5 dans laquelle le titanate est mis en contact avec le sel d'"onium" quaternaire dans un milieu liquide, pendant une durée d'environ 1 à environ 60 minutes, à une température de 0 à 100°C et dans un rapport molaire titanate/sel d'"onium" de 0,5 : 1 à de 2 : 1.

7 - Utilisation de la composition selon l'une des revendications 1 à 6 comme catalyseur d'estérification ou de polyestérification d'au moins un époxyde par au moins un anhydride d'acide carboxylique.

8 - Utilisation selon la revendication 7 dans laquelle l'anhydride d'acide carboxylique est un anhydride mixte ou un anhydride symétrique dérivant d'au moins un acide monocarboxylique de formule générale $R^{12}COOH$ dans laquelle $R^{12}$ représente un groupe organique.

9 - Utilisation selon la revendication 7 dans laquelle l'anhydride d'acide carboxylique est un anhydride cyclique d'un acide dicarboxylique.

10 - Utilisation selon l'une des revendications 7 à 9 dans laquelle l'époxyde est un époxyde interne ou un époxyde terminal ayant de 2 à 62 atomes de carbone dans sa molécule.

## Patentansprüche

1. Katalytische Mischung, die Titan und Phosphor enthält,
dadurch gekennzeichnet,
daß sie entsteht, indem man mindestens ein Titanat der allgemeinen Formel (I):

(I) $Ti(OR)_4$

in dem jede der Gruppen R unabhängig voneinander, eine Kohlenwassererstoffgruppe mit 1 bis 10 Kohlenstoffatomen darstellt, mit mindestens einem quartären "Onium"-Salz einer Säure in Kontakt bringt, die aus der Gruppe gewählt wird, die aus Phosphorsäure der Formel $H_3PO_4$ und den phosphorigen

Säuren der allgemeinen Formel (II):

$$(II) \qquad R^7H_2PO_3$$

in der $R^7$ eine Kohlenwasserstoffgruppe mit 1 bis 38 Kohlenstoffatomen ist und deren quartäre "Onium"-Rest ein Rest der allgemeinen Formel (III) ist:

$$(III) \qquad (R^8R^9R^{10}R^{11}M)^+$$

in der M ein Element der Gruppe VA des Periodensystems der Elemente ist und $R^8$ ,$R^9$ ,$R^{10}$ ,$R^{11}$ identisch oder unterschiedlich, jeder ein Wasserstoffatom oder eine Kohlenwasserstoffgruppe darstellen, die mit einer Hydroxylgruppe substituiert ist oder auch nicht und 1 bis 38 Kohlenstoffatome besitzt.

2. Mischung nach Anspruch 1, in derder quartäre "Onium"-Rest ein Rest der allgemeinen Formel (III) ist, in dem M ein Stickstoff- oder Phosphoratom ist.

3. Mischung nach einem der Ansprüche 1 und 2, in der das Salz des quartären "Oniums" ein Salz der Phosphorsäure ist, die in ihrem Molekül 2,3 oder 4 Atome der Gruppe VA des Periodensystems der Elemente enthält.

4. Mischung nach einem der Ansprüche 1 und 2, in der das Salz des quartären "Oniums" ein Salz der Phosphorsäure der allgemeinen Formel (II) ist, die in ihrem Molekül zwei oder drei Atome der Gruppe VA des Periodensystems der Elemente enthält.

5. Mischung nach einem der Ansprüche 1 bis 4, in der das Titanat ein Titanat der allgemeinen Formel (I) ist, in der jede der Gruppen R, unabhängig voneinander, eine lineare oder verzweigte Alkylgruppe darstellt.

6. Mischung nach einem der Ansprüche 1 bis 5, in der das Titanat mit dem quartären "Onium"-Salz in flüssigem Medium, während einer Dauer von ca-1 bis ca. 60 min, bei einer Temperatur von 0 bis 100°C und in einem Molverhältnis Titanat/"Onium"-Salz von 0,5 : 1 bis 2 : 1 in Kontakt gebracht wird.

7. Verwendung der Mischung nach einem der Ansprüche 1 bis 6 als Katalysator zur Veresterung oder Polyveresterung von mindestes einem Epoxid mit mindestens einem Carbonsäureanhydrid.

8. Verwendung nach Anspruch 7, wobei das Carbonsäureanhydrid ein gemischtes oder symmetrisches Anhydrid ist, das von mindestens einer Moncarbonsäure der allgemeinen Formel $R^{12}$ COOH abgeleitet ist, in der $R^{12}$ eine organische Gruppe darstellt.

9. Verwendung nach Anspruch 7 wobei das Carbonsäureanhydrid ein zyklisches Anhydrid einer Carbonsäure ist.

10. Verwendung nach einem der Ansprüche 7 bis 9, wobei das Epoxid ein inneres oder endständiges Epoxid ist und aus 2 bis 62 Kohlenstoffatomen im Molekül besteht.

## Claims

1 - A catalytic composition comprising titanium and phosphorus characterized in that it results from the contacting of at least one titanate of general formula (I):

$$(I) \qquad Ti(OR)_4$$

in which each one of the R groups independantly represents a hydrocarbon group having 1 to 10 atoms of carbon, with at least one quaternary "onium" salt of an acid selected from the group consisting of phosphoric acid of formula $H_3PO_4$ and the phosphonic acids of general formula (II) :

$$(II) \qquad R^7H_2PO_3$$

in which $R^7$ is a hydrocarbon group having 1 to 38 atoms of carbon, and whose quaternary "onium" remainder is a remainder of general formula (III) :

$$(III) \qquad (R^8R^9R^{10}R^{11}M)^+$$

in which M is an element from group VA of the periodic table of elements and $R^8$, $R^9$, $R^{10}$ and $R^{11}$, identical or different, represent each an atom of hydrogen or a hydrocarbon group, substituted or not by a hydroxyl group, having 1 to 38 atoms of carbon.

2 - A composition according to claim 1 wherein the quaternary "onium" remainder is a remainder of general formula (III) in which M represents an atom of nitrogen or of phosphorus.

3 - A composition according to any one of claims 1 and 2 wherein the quaternary "onium" salt is a phosphoric

acid salt comprising in its molecule 2,3 or 4 atoms from group VA of the periodic table of elements.

4 - A composition according to any one of claims 1 and 2 wherein the quaternary "onium" salt is a phosphonic acid salt of general formula (II) comprising in its molecule 2 or 3 atoms from group VA of the periodic table of elements.

5 - A composition according to any one of claims 1 to 4 wherein the titanate is a titanate of general formula (I) in which each one of the R groups independantly represents an alkyl group, linear or branched.

6 - A composition according to any one of claims 1 to 5 wherein the titanate is contacted with the quaternary "onium" salt in a liquid medium, for a duration ranging from about 1 to about 60 minutes, at a temperature ranging from 0 to 100°C and with a molar ratio titanate/"onium" salt ranging from 0.5 : 1 to 2 : 1.

7 - Use of the composition according to any one of claims 1 to 6 as an esterification or a polyesterification catalyst of at least one epoxide by at least one carboxylic acid anhydride.

8 - Use according to claim 7 wherein the carboxylic acid anhydride is a mixed anhydride or a symmetric anhydride derived from at least one monocarboxylic acid of general formula $R^{12}COOH$ in which $R^{12}$ represents an organic group.

9 - Use according to claim 7 wherein the carboxylic acid anhydride is a cyclic anhydride of a dicarboxylic acid.

10 - Use according to any one of claims 7 to 9 wherein the epoxide is an internal epoxide or a terminal epoxide having 2 to 62 atoms of carbon in its molecule.

FIG.1

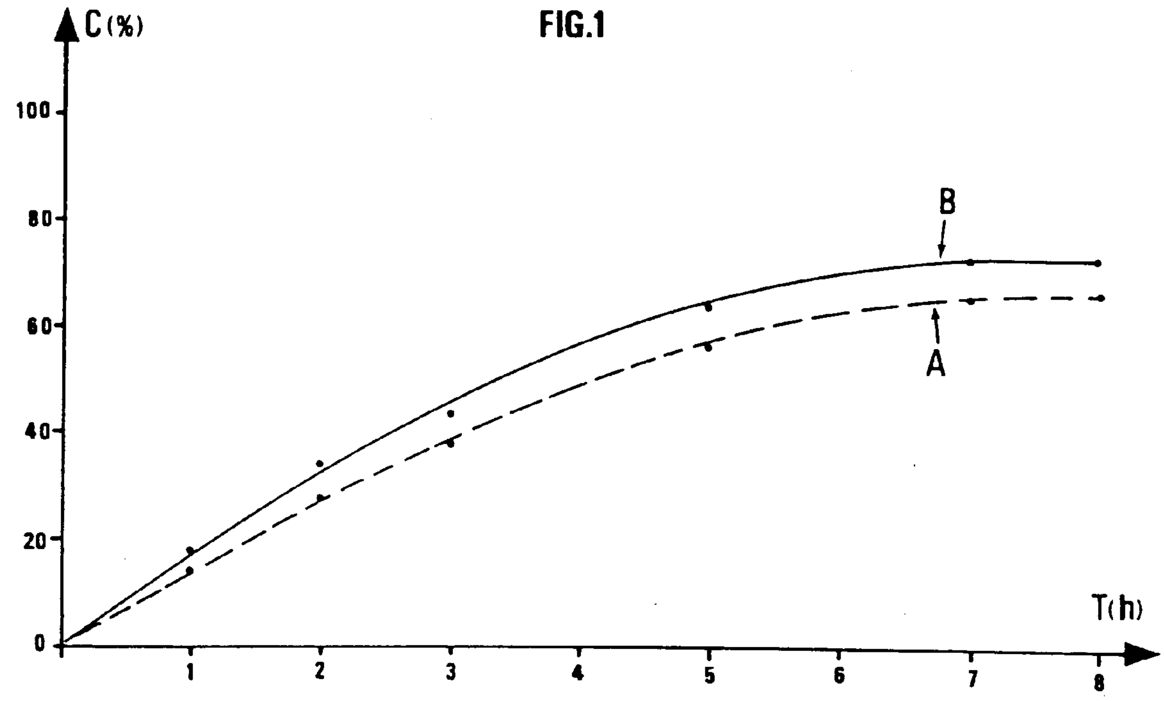


FIG.2

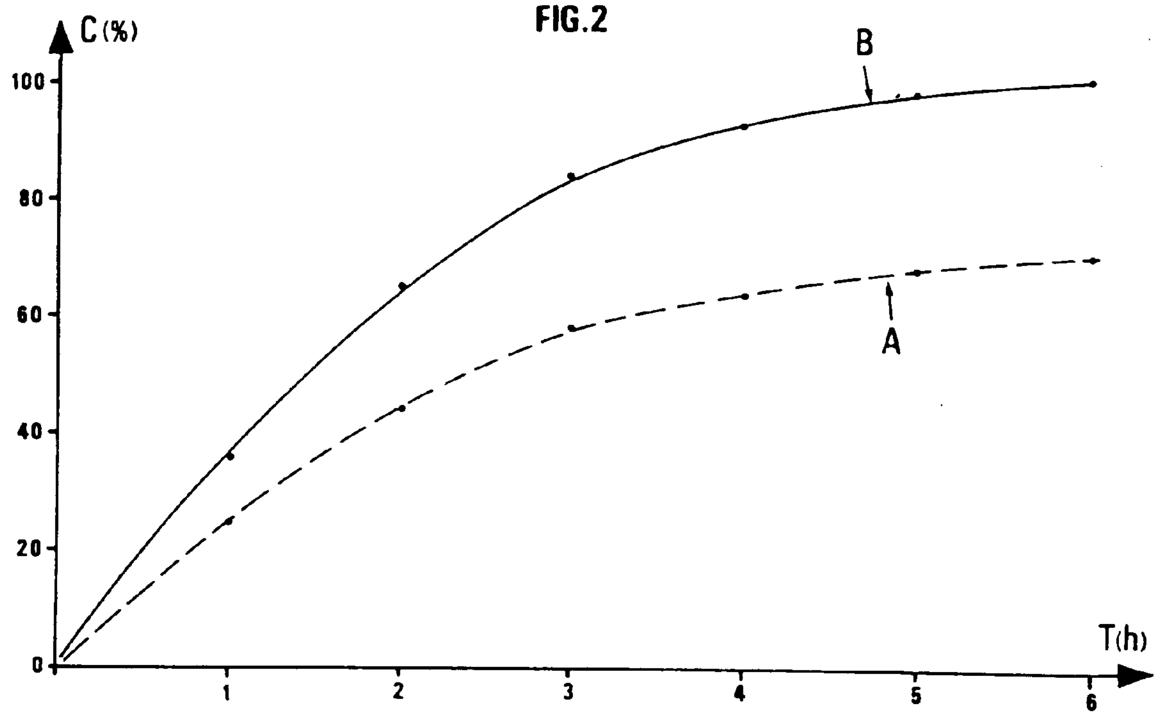

FIG.3

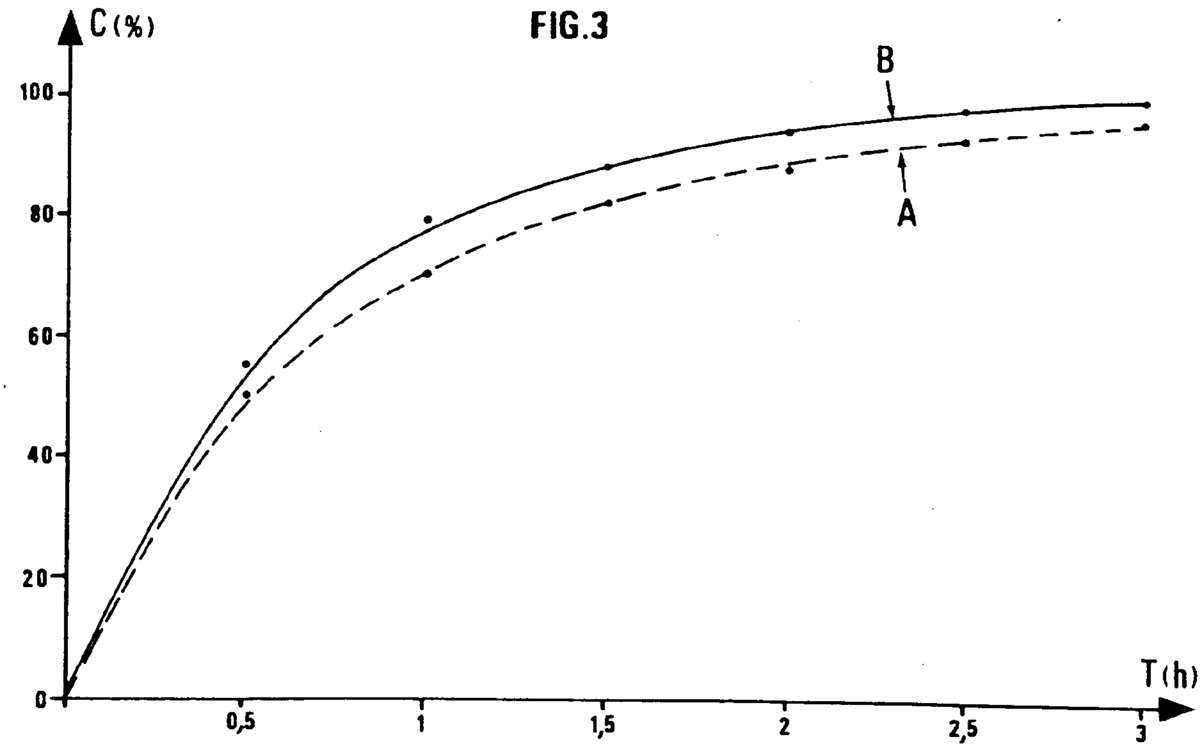


FIG.4

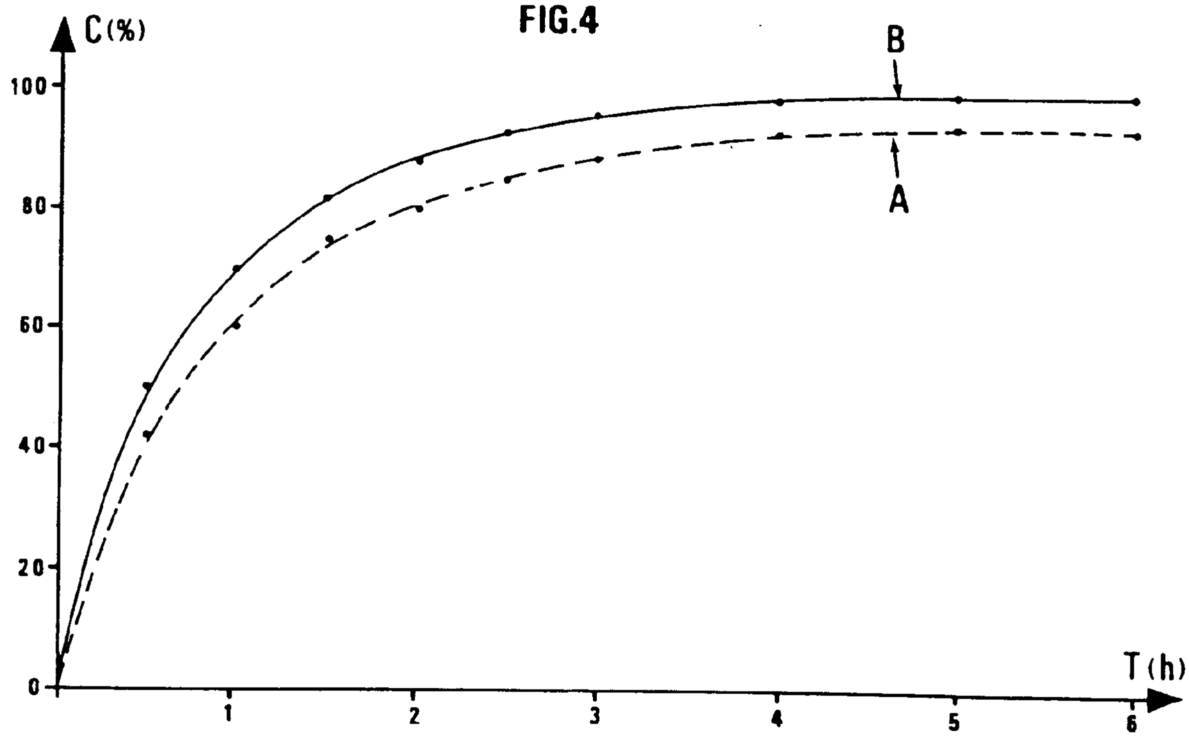

FIG.5

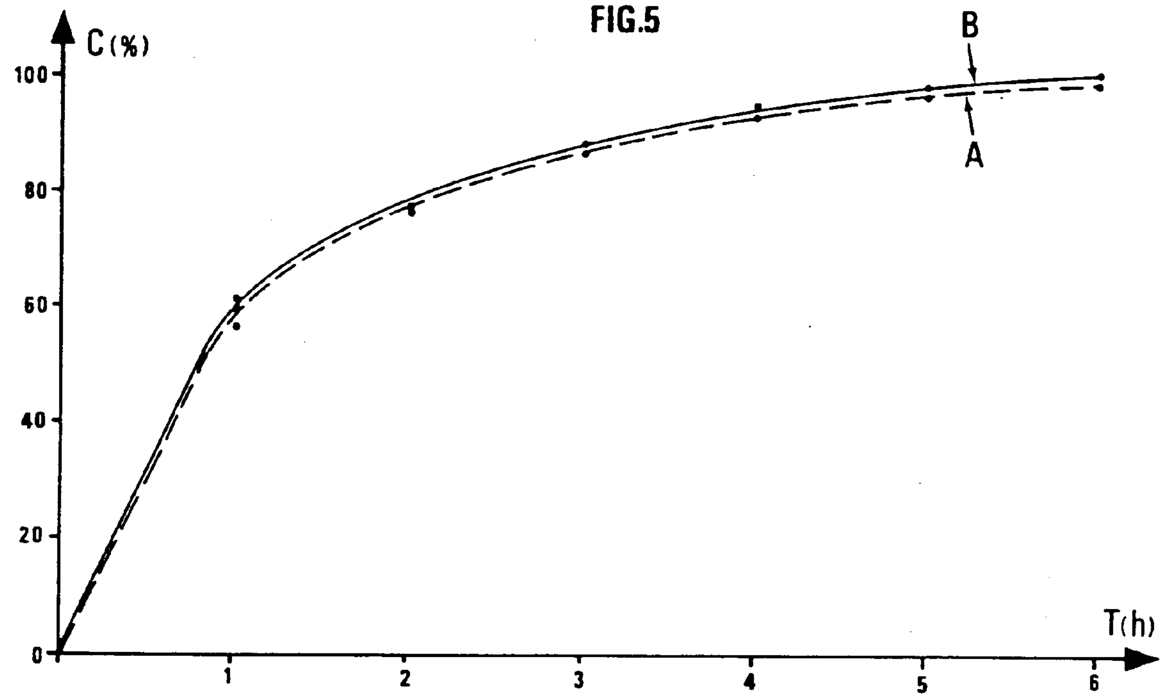


FIG.8

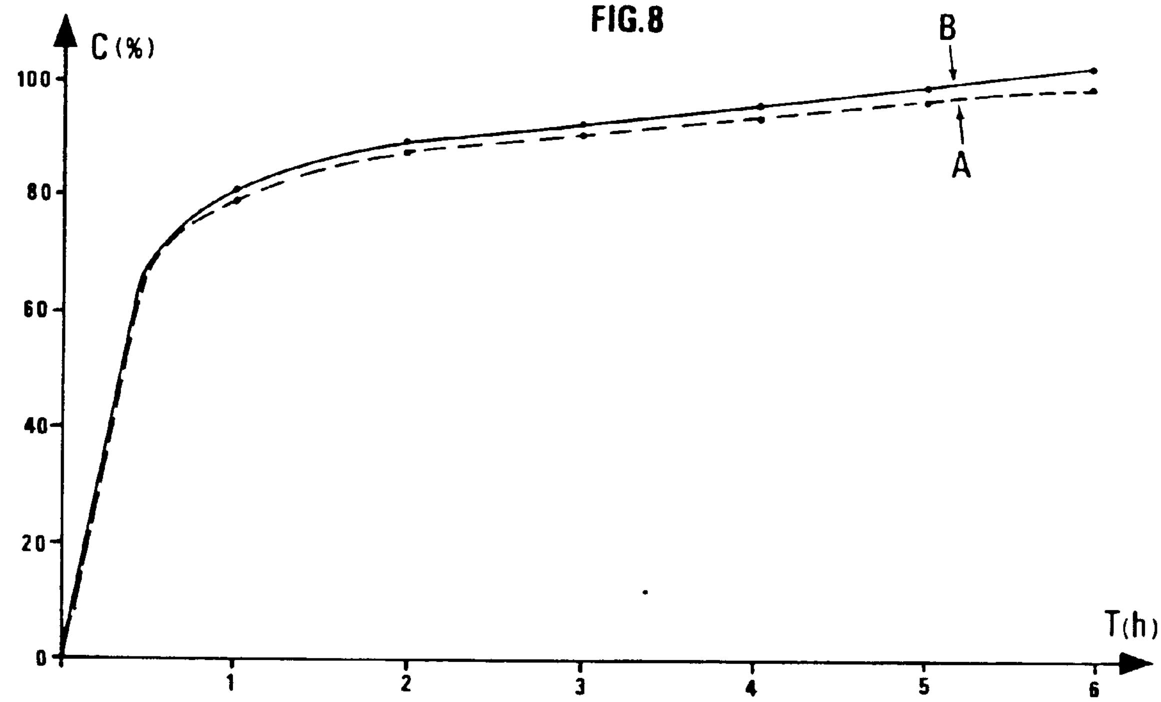

FIG.6

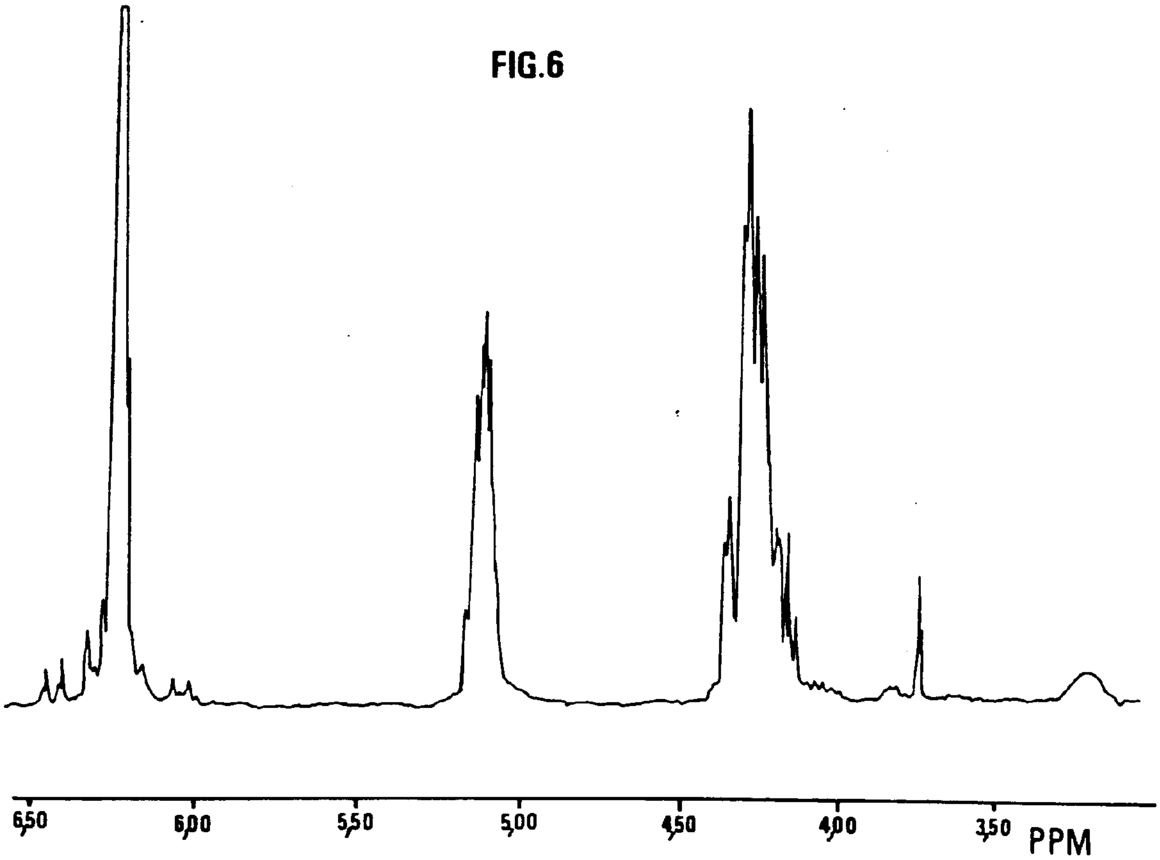


FIG.7